# FASCICULE DE BREVET EUROPEEN

(11) **EP 1 587 601 B1**
(45) Date de publication et mention de la délivrance du brevet: **06.12.2006**
(21) Numéro de dépôt: 03815840.8
(22) Date de dépôt: 30.12.2003
(51) Int. Cl.: B01D 46/26, F04D 17/16

(54) **MACHINE ROTATIVE DESTINEE A ENGENDRER UN FLUX DE FLUIDE EPURE REGLABLE ET CAPABLE DE S'AUTO-NETTOYER**
EINSTELLBARE, SELBSTREINIGENDE ROTATIONSMASCHINE, DIE EINEN STROM GEREINIGTEN FLUIDS ERZEUGEN SOLL
ADJUSTABLE, SELF-CLEANING ROTARY MACHINE WHICH IS INTENDED TO PRODUCE A FLOW OF PURIFIED FLUID

(30) Priorité: 17.01.2003 FR 0300689
(43) Date de publication de la demande: 26.10.2005
(73) Titulaire: Simon, François, 92190 Meudon (FR); Simon, Sandre, 62190 Meudon (FR)
(72) Inventeur: Simon, François, 92190 Meudon (FR); Simon, Sandre, 62190 Meudon (FR)
(74) Mandataire: de Saint-Palais, Arnaud Marie
(86) Numéro de dépôt international: PCT/FR2003/003946
(87) Numéro de publication internationale: WO 2004/071623

(56) Documents cités:
- GB-A- 532 467
- GB-A- 988 854
- US-A- 3 289 397
- US-A- 3 765 155
- US-A- 3 800 514
- US-A- 5 297 942

## Description

La présente invention concerne une machine rotative apte à engendrer la circulation d'un flux de fluide tout en le traitant simultanément par extraction de matières contenues dans ce flux et capable de libérer les matières retenues au cours d'un processus d'auto-nettoyage et dont les performances de filtration peuvent être adaptées très facilement à des besoins variables.

Elle s'applique, par exemple, à la ventilation et à la purification (dépollution) de l'air ambiant ou des gaz d'échappement de moteurs thermiques ou à la séparation de matière transportée par des effluents liquides.

D'une manière générale, on sait que pour engendrer un flux d'air à une pression voisine de la pression atmosphérique, on utilise notamment des ventilateurs (ou des aspirateurs) comportant, d'une part, un rotor entraîné par un moteur et muni d'un aubage ou d'une turbine qui imprime au fluide une augmentation de vitesse et, d'autre part, un diffuseur qui a pour fonction de transformer une partie de l'énergie cinétique en augmentation de pression supplémentaire.

Il s'avère qu'en dépit des multiples efforts déployés pour réduire le bruit, les ventilateurs proposés à l'heure actuelle, y compris les ventilateurs centrifuges, demeurent bruyants à des vitesses de rotation moyennes ou élevées. Ceci est dû à la fois au fait que les aubages en matière rigide sont le siège de vibrations résultant notamment de la présence de masses excentriques dans le rotor et/ou de l'action du fluide sur les aubes et/ou des turbulences engendrées par les aubes.
Par ailleurs, ces ventilateurs ne permettent pas d'assurer par eux-mêmes une fonction de purification du fluide véhiculé : pour remplir une telle fonction, ils sont nécessairement associés à des dispositifs de purification tels que des filtres dans lesquels les impuretés se trouvent retenues. Tel est par exemple le cas des aspirateurs domestiques qui comprennent dans le circuit d'aspiration de la turbine une chambre de filtrage des poussières.
Le Demandeur a déjà proposé une machine rotative dont le rotor comprend au moins une garniture réalisée en une matière perméable aux fluides, apte à entraîner en rotation le fluide qu'elle contient de manière à assurer son éjection sous l'effet de la force centrifuge ; la garniture selon un mode de réalisation préféré, consiste en une matière composée de fibres bouclées dont le diamètre est de l'ordre de 0,1 à 5mm ; la susdite garniture est solidaire d'un disque ou d'une cage, monté rotatif dans un boîtier, et entraîné par un moteur ; le fluide est aspiré à travers un orifice circulaire, non nécessairement coaxial, puis est refoulé dans l'espace annulaire entourant partiellement le disque supportant la garniture, et s'écoule en direction de la buse d'évacuation située à l'extrémité dudit espace annulaire.
De même, dans les brevets GB 532 467 et US 3 289 397, on a déjà proposé des dispositifs de filtrage et de purification d'air mettant en oeuvre une garniture en forme de couronne entraînée en rotation grâce à un moteur.

D'une manière générale, on sait que l'efficacité de filtrage des machines rotatives telles que celle décrite ci-dessus, est définie comme étant le rapport en % de l'écart entre la concentration particulaire ambiante et la concentration particulaire en sortie de ces machines rotatives, ramené à la concentration ambiante, multiplié par 100.
Par ailleurs, le rendement aéraulique de ces machines rotatives est proportionnel au rapport du produit de la pression et du débit du fluide au niveau de la buse d'évacuation, ramené à la puissance mécanique fournie au rotor.

Pour des caractéristiques géométriques et physiques données de leur garniture, l'efficacité de filtrage des machines du type susdit change en fonction de la vitesse de rotation de la garniture et de la taille des particules véhiculées par le fluide.

Lorsque la vitesse de rotation de la garniture augmente, l'efficacité de filtrage augmente pour les grosses particules (captation par impacts), tandis que l'efficacité de filtrage diminue pour les petites particules (effet d'entraînement par le flux).

Lorsque la vitesse de rotation de la garniture devient très élevée, l'efficacité de filtrage devient négative pour les petites particules emprisonnées suite à un effet de largage desdites petites particules ; le même effet de largage se produit pour les grosses particules emprisonnées, à très faible vitesse de rotation de la garniture ou lors d'arrêts ou de redémarrages.

Quant au rendement aéraulique, il augmente avec la vitesse de rotation de la garniture puis diminue au-delà d'un optimum.

En conclusion, pour des caractéristiques géométriques et physiques données d'une garniture, à une vitesse de rotation considérée comme optimale, correspond une efficacité de filtrage maximum pour un spectre particulaire donné et devrait correspondre un rendement aéraulique maximum.

Or, il s'avère que l'obtention d'une efficacité de filtrage maximum, pour un spectre particulaire le plus large possible à une vitesse de rotation donnée n'est pas aisée et est d'autant moins aisée si, à cette même vitesse de rotation, doit correspondre un rendement aéraulique maximum.

Par ailleurs, le colmatage des cavités de la garniture augmente l'efficacité de filtrage au détriment du rendement aéraulique, et risque à moyen terme de rendre la machine rotative inopérante ; le remplacement de la garniture devient indispensable.

L'invention a donc pour but de résoudre ces difficultés en exploitant des modifications de caractéristiques physiques de la garniture (et par conséquent la modification de l'efficacité de filtrage), du rendement aéraulique et de la capacité d'évacuation des particules emprisonnées engendrées par des variations de sa vitesse de rotation.

Elle propose la réalisation d'une machine rotative aspirante/refoulante/adaptable en fonctionnement, de conception très simple et peu coûteuse, qui soit, en outre, très silencieuse tout en assurant par elle-même un traitement du flux de fluide engendré, et capable de retenir ou de libérer à volonté les matières véhiculées, au cours d'un processus d'auto-nettoyage.

A cet effet, la machine rotative selon l'invention apte à engendrer un flux de fluide, comprenant un rotor portant une garniture en forme de couronne au moins partiellement réalisée en matière souple perméable aux fluides, des moyens d'entraînement en rotation à vitesse variable du rotor, caractérisée en ce qu'elle comprend des moyens d'auto-nettoyage comportant en combinaison :
- des moyens de commande aptes à agir sur les susdits moyens d'entraînement en rotation à vitesse variable du rotor de manière à engendrer une variation brusque de la vitesse de rotation dudit rotor,
- des moyens de couplage entre une première face de la garniture et les susdits moyens d'entraînement, et
- une pièce annulaire portée par une deuxième face de la garniture de manière à ce qu'en raison de l'inertie de cette pièce annulaire, ladite variation brusque de la vitesse de rotation dudit rotor engendre un processus de torsion/compression de la garniture et en conséquence ledit auto-nettoyage de cette garniture.

Avantageusement, les moyens permettant d'effectuer la susdite déformation font intervenir un dispositif de transmission entre le rotor et l'une des faces cylindriques de la garniture, de manière à ce qu'une variation de vitesse du rotor engendre, sous l'effet de la variation de la force centrifuge qui en résulte, une compression et/ou une dilatation de la garniture qui se trouve retenue par les moyens de transmission.

En variante, ces moyens pourront faire intervenir un dispositif de transmission reliant le rotor à l'une des deux faces radiales de la garniture, ainsi qu'une pièce annulaire solidaire de l'autre face radiale de la garniture, de manière à ce qu'en raison de l'inertie de cette pièce annulaire, une variation de la vitesse de rotation du rotor engendre un processus de torsion et de compression de la garniture (compression due au rapprochement des deux faces radiales de la garniture).

Bien entendu, dans un cas comme dans l'autre, la garniture devra être réalisée en une matière perméable suffisamment souple, de manière à ce qu'en ajustant la vitesse de rotation, on puisse obtenir en régime permanent les caractéristiques de filtration souhaitées permettant de capter les particules dans la gamme de dimension désirée et, en faisant varier la vitesse de rotation du rotor, on obtienne une évacuation des particules captées précédemment et une régénération des caractéristiques de filtration.

Ces deux solutions conviennent particulièrement bien à la capture de mélanges de brouillards. A cet effet, la garniture pourra être réalisée en matière adsorbante tandis que des moyens seront prévus pour pulvériser un liquide dans le flux d'air aspiré. Des moyens seront en outre prévus pour recueillir le liquide absorbé par la garniture et pour l'éjecter sous l'effet de la force centrifuge.

Des modes d'exécution de l'invention seront décrits ci-après, à titre d'exemples non limitatifs, avec référence aux dessins annexés dans lesquels :
La figure 1 est une coupe axiale schématique d'une machine rotative de traitement d'un gaz tel que de l'air ambiant ;
La figure 2 est une coupe transversale de la machine représentée sur la figure 1 ;
La figure 3 est une coupe axiale schématique d'une première variante d'exécution de la machine rotative de traitement de gaz ;
La figure 4 est une coupe transversale de la machine rotative représentée sur la figure 3 ;
Les figures 5a, 5b, 5c sont une représentation schématique d'une forme possible de rotor en matière souple, perméable aux fluides ;
Les figures 6a à 6c sont des coupes axiales d'une deuxième variante d'exécution de la machine rotative, en régime permanent à une première vitesse de rotation (fig. 6a), à une deuxième vitesse de rotation (fig. 6b) et en régime transitoire, lors d'une variation brusque de vitesse (fig. 6c).

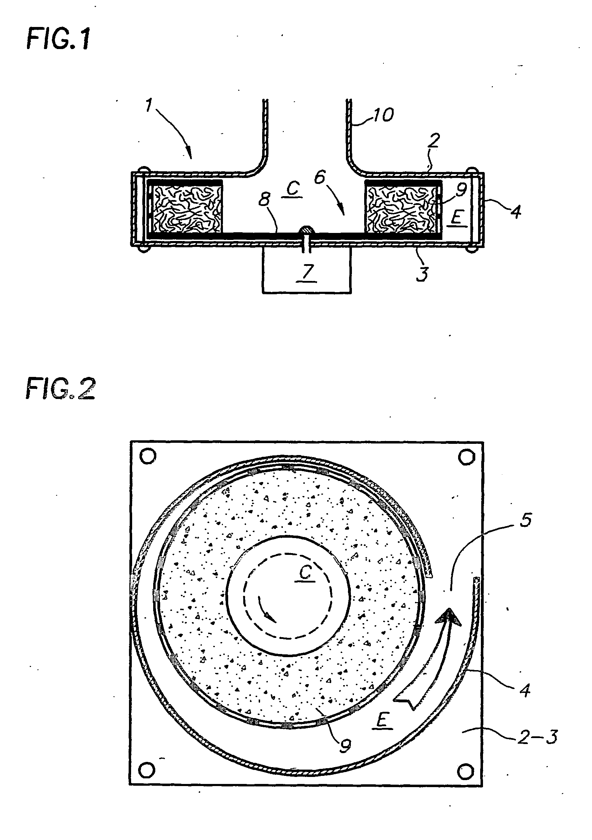

Dans l'exemple représenté sur les figures 1 et 2, la machine rotative de traitement comprend un boîtier 1 comportant deux flasques rectangulaires parallèles coaxiaux 2, 3, reliés l'un à l'autre par une paroi transversale légèrement en spirale 4 qui s'étend perpendiculairement ou obliquement par rapport aux deux flasques. Cette paroi 4 s'ouvre à l'extérieur, par un orifice latéral 5. Eventuellement, elle pourra présenter un profil concave, convexe ou incliné par rapport à l'axe de rotation. A l'intérieur du boîtier est monté rotatif un rotor 6 axé perpendiculairement aux deux flasques 2, 3 et entraîné en rotation par un moteur électrique 7 solidaire du flasque 3. Ce rotor est donc au moins partiellement entouré par la paroi transversale 4.

Dans cet exemple, le rotor 6 comprend une cage 8 dans laquelle est contenue une couronne 9 perméable à l'air. Cette couronne 9 peut être réalisée en matière souple, réticulaire et/ou alvéolaire à cellules ouvertes et/ou en matière fibreuse ou microfibreuse, d'origine naturelle, et/ou métallique, et/ou synthétique, hydrophile et/ou hydrophobe, oléophile et/ou oléophobe, et/ou enduite d'une substance adhésive.

L'épaisseur de la cage 8 est sensiblement égale à l'écartement des deux flasques 2, 3.

Le flasque 2 comprend, au droit de la cavité délimitée par la couronne, un orifice circulaire non nécessairement coaxial.

Cet orifice est prolongé par un élément tubulaire 10 constituant une buse d'aspiration.

Le fonctionnement de cette machine rotative est alors le suivant : l'entraînement en rotation de la couronne 9 par le moteur 7 provoque la rotation de l'air contenu dans cette couronne 9. Sous l'effet de cette rotation, la masse d'air soumise à la force centrifuge, s'écoule dans l'espace E compris entre la couronne 9 et la cloison transversale 4 où elle est guidée vers l'orifice de sortie 5. Parallèlement, cet écoulement provoque une aspiration d'air dans la cavité C et dans la buse 10 et engendre donc un courant d'aspiration.

Lors de la mise en rotation de la couronne 9, les alvéoles constituant le matériau de la susdite couronne 9, sous l'effet de la force centrifuge, s'étirent dans la zone proche de l'axe de rotation, et se compriment dans la zone périphérique, proche de la cage 8. Ainsi, un gradient des caractéristiques de filtrage est constitué radialement, permettant de capter un large spectre particulaire ou de brouillard ou, par exemple, de bulles (travail en phase liquide). Ainsi, aux vitesses de rotation élevées de la couronne 9, favorisant ainsi le rendement aéraulique, l'efficacité de filtrage est augmentée en périphérie, pour les particules de petites dimensions, et conservée, pour les particules de grandes dimensions, à la face interne et/ou dans la masse de la couronne.

L'air qui ressort par l'orifice 5 se trouve ainsi purifié.

Lors d'une diminution de la vitesse de rotation de la couronne 9, en deçà de la vitesse de rotation nominale, les alvéoles constituant le matériau de la susdite couronne 9 retrouvent leurs dimensions d'origine à vitesse de rotation lente ou nulle, et notamment celles situées dans la zone périphérique, proches de la cage 8. Ainsi, les particules emprisonnées dans lesdites alvéoles pourront s'échapper par l'orifice E ; le processus de nettoyage est ainsi mis en oeuvre, moyennant un dispositif de détournement du flux chargé des particules, non représenté sur les figures 1 et 2.

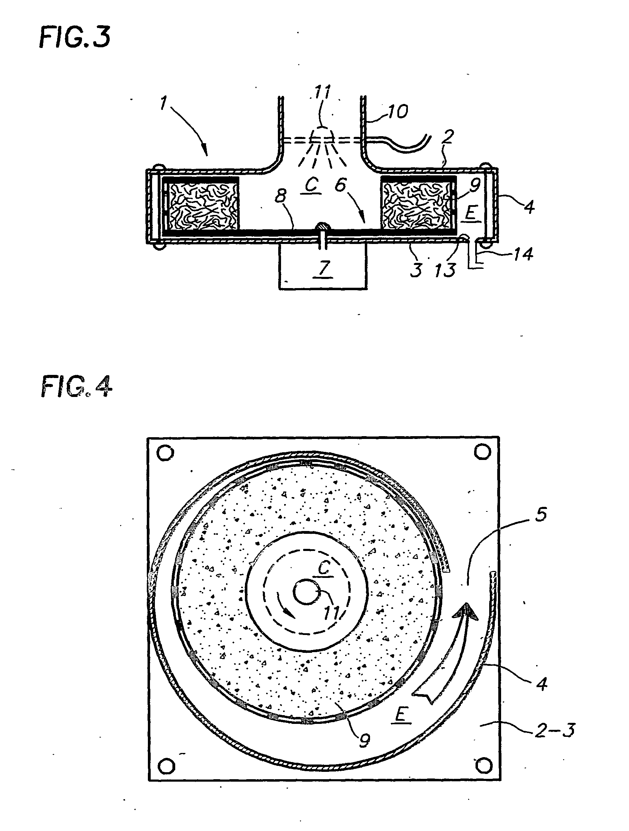

Dans l'exemple représenté sur les figures 3 et 4, la machine rotative de traitement comprend un boîtier 1 comportant deux flasques rectangulaires parallèles coaxiaux 2, 3, reliés l'un à l'autre par une paroi transversale légèrement en spirale 4 qui s'étend perpendiculairement ou obliquement par rapport aux deux flasques. Cette paroi 4 s'ouvre à l'extérieur, par un orifice latéral 5. Eventuellement, elle pourra présenter un profil concave, convexe, ou incliné par rapport à l'axe de rotation. A l'intérieur du boîtier 1 est monté rotatif un rotor 6 axé perpendiculairement aux deux flasques 2, 3 et entraîné en rotation par un moteur électrique 7, solidaire du flasque 3, ce rotor est donc au moins partiellement entouré par la paroi transversale 4.

Avantageusement, la paroi transversale 4 est munie de cannelures orientées vers le bas ou de reliefs éventuellement hélicoïdaux ou obliques, hydrophiles ou hydrophobes, servant à canaliser du liquide dans la direction souhaitée.

Dans cet exemple, le rotor 6 comprend une couronne 8 dans laquelle est située une couronne 9 perméable à l'air. Cette couronne 9 peut être réalisée en matière souple, réticulaire et/ou alvéolaire à cellules ouvertes et/ou en matière fibreuse ou microfibreuse, d'origine naturelle, et/ou métallique, et/ou synthétique, et/ou présentant des propriétés antiseptiques. Avantageusement, elle pourra présenter des propriétés d'adsorption et/ou catalytiques.

L'épaisseur de l'ensemble couronne 9 + cage 8 est sensiblement égale à l'écartement des deux flasques 2, 3.

Le flasque 2 comprend, au droit de la cavité délimitée par la couronne, un orifice circulaire, non nécessairement coaxial.

Cet orifice est prolongé par un élément tubulaire 10 constituant une buse d'aspiration.

Cette buse d'aspiration est équipée d'au moins une tête de pulvérisation 11 d'un liquide tel que de l'eau ou de l'huile.

Le flasque inférieur 3 comprend, en outre, une cuvette 13 de faible largeur qui s'étend sensiblement le long de la paroi transversale 4. Dans le fond de cette cuvette débouche un ou plusieurs conduits d'évacuation d'eau 14 (ou d'huile).

Le fonctionnement de cette machine rotative est alors le suivant : l'entraînement en rotation de la couronne 9 par le moteur 7 provoque la rotation de l'air contenu dans cette couronne 9 et la déformation de cette dernière. Sous l'effet de cette rotation, la masse d'air soumise à la force centrifuge, s'écoule dans l'espace E compris entre la couronne 9 et la cloison transversale 4 où elle est guidée vers l'orifice de sortie 5. Parallèlement, cet écoulement provoque une aspiration d'air dans la cavité C et dans la buse 10 et engendre donc un courant d'aspiration. Ce courant d'aspiration reçoit un brouillard de gouttelettes émanant du pulvérisateur 11. Ce brouillard engendre une première phase d'adsorption des impuretés contenues dans l'air.

Lors de leur passage dans la couronne 9, les gouttelettes, chargées d'impuretés, sont adsorbées par la matière souple, perméable au fluide, tandis que l'air continue à être éjecté vers l'extérieur. Ces gouttelettes, qui sont alors canalisées par la matière souple (adsorbante), sont elles aussi soumises à la fois à la force centrifuge et à la pesanteur. Elles fusionnent par coalescence le long des fibres ou sur les parois des alvéoles, ce qui engendre leur désorption. L'eau (ou l'huile) résultante est éjectée sur la paroi transversale et s'écoule le long des susdites cannelures ou des susdits reliefs pour parvenir dans la cuvette 13 avant d'être évacuée par les conduits 14.

Lors de la mise en rotation de la couronne 9, les parois des alvéoles, ou les fibres, ou microfibres constituant le matériau de la susdite couronne 9, sous l'effet de la force centrifuge, s'étirent dans la zone proche de l'axe de rotation, et se contractent dans la zone centrale, proche de la cage 8. Ainsi, les rayons de courbure des microfibres de la zone périphérique diminuent, ce qui provoque une augmentation du coefficient de mouillabilité. Un gradient des caractéristiques de filtrage est constitué radialement, par augmentation progressive de la densité du réseau de la matière, permettant de capter un large spectre particulaire. Par ailleurs, aux vitesses de rotation élevées de la couronne 9 qui augmentent ainsi le rendement aéraulique, l'efficacité de filtrage est augmentée, pour les particules de petites dimensions, et conservée, pour les particules de grandes dimensions.

L'air qui ressort par l'orifice 5 se trouve ainsi purifié.

Lors d'une diminution de la vitesse de rotation de la couronne 9, en deçà de la vitesse de rotation nominale, les alvéoles ou les microfibres constituant le matériau de la susdite couronne 9 retrouvent leurs dimensions d'origine à vitesse de rotation lente ou nulle, et notamment celles situées dans la zone périphérique, proches de la cage 8. Ainsi, les particules emprisonnées dans lesdites alvéoles pourront s'échapper par l'orifice E ; le processus de nettoyage est ainsi mis en oeuvre, moyennant un dispositif de détournement du flux chargé des particules, non représenté sur les figures 3 et 4.

Bien entendu, l'invention ne se limite pas aux modes d'exécution précédemment décrits.

Ainsi, la garniture pourra présenter une structure composite. Elle pourra comporter deux parties plus ou moins perméables ou imperméables au fluide déplacé ou propulsé, de manière à diriger le fluide dans la masse ou augmenter le rendement de capture et/ou aéraulique de la masse réticulaire ou évacuer des condensats, des liquides ou des bulles (en phase liquide). En particulier, les couronnes pourront être constituées par des couches superposées et/ou concentriques de matières différentes.

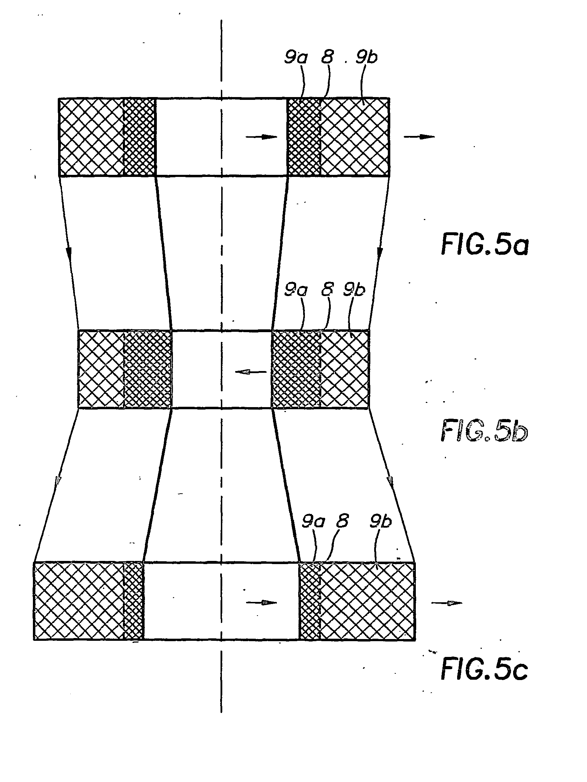

Dans l'exemple représenté sur les figures 5a, 5b, 5c, la couronne 9 est constituée de deux couches concentriques, situées de part et d'autre de la cage 8.

La couronne interne 9a est de même nature que celle présentée dans les exemples précédents ; la couronne externe 9b est constituée d'un matériau possédant des alvéoles plus larges que celles caractérisant le matériau de la couronne 9a ; par ailleurs, son épaisseur radiale est plus grande que celle définissant la couronne intérieure 9a.

Lors de la mise en rotation des couronnes 9a et 9b (figure 5a), les alvéoles constituant le matériau de la susdite couronne 9a, sous l'effet de la force centrifuge, se dilatent dans la zone proche de l'axe de rotation, et se contractent dans la zone périphérique, proche de la cage 8. Les alvéoles constituant le matériau de la susdite couronne 9b, sous l'effet de la force centrifuge, se dilatent de plus en plus vers l'extérieur. Ainsi, un gradient des caractéristiques de filtrage est constitué radialement par les couronnes 9a et 9b, permettant de capter un très large spectre particulaire.

L'air qui ressort par l'orifice 5 se trouve ainsi purifié.

Lors d'une diminution de la vitesse de rotation des couronnes 9a et 9b, en deçà de la vitesse de rotation nominale, (figure 5b), les alvéoles constituant le matériau des susdites couronnes 9a et 9b retrouvent leurs dimensions d'origine à vitesse de rotation nulle, et notamment celles situées en zone périphérique concernant la couronne 9b. Ainsi les particules, notamment de grandes dimensions, emprisonnées dans lesdites alvéoles, pourront s'échapper par l'orifice E.

Lors d'une augmentation de la vitesse de rotation des couronnes 9a et 9b, au-delà de la vitesse de rotation nominale (figure 5c), les alvéoles constituant le matériau de la couronne 9a vont se comprimer, tandis que celles de la couronne 9b vont s'étirer. Ainsi, les particules, notamment de faibles dimensions, emprisonnées dans lesdites alvéoles, pourront s'échapper par l'orifice E.

Le processus de nettoyage est mis ainsi en oeuvre par effet de compression et de dépression des couronnes 9a et 9b à des vitesses de rotation situées de part et d'autre de la vitesse nominale de fonctionnement par migration vers l'extérieur des matières retenues par les couronnes 9a et 9b.

Ce processus de nettoyage est associé à un dispositif de détournement du flux chargé des particules, non représenté sur les figures 5a, 5b, 5c.

Bien entendu, les applications des machines précédemment décrites peuvent être très variées : pompe, aspirateur, circulateur, ventilateur, soufflerie, sèche-cheveux, séparateur de phases ....

Dans toutes ces applications, la machine rotative selon l'invention permet d'apporter d'importantes simplifications et de réduire les coûts. Compte tenu de la nature du rotor (souplesse de la garniture), elle ne présente aucun risque pour l'utilisateur (par opposition à un rotor à aubage classique). Par ailleurs, afin d'éviter le colmatage des garnitures, un procédé consistant à faire varier rapidement la vitesse de rotation du rotor permet de libérer les matières retenues.

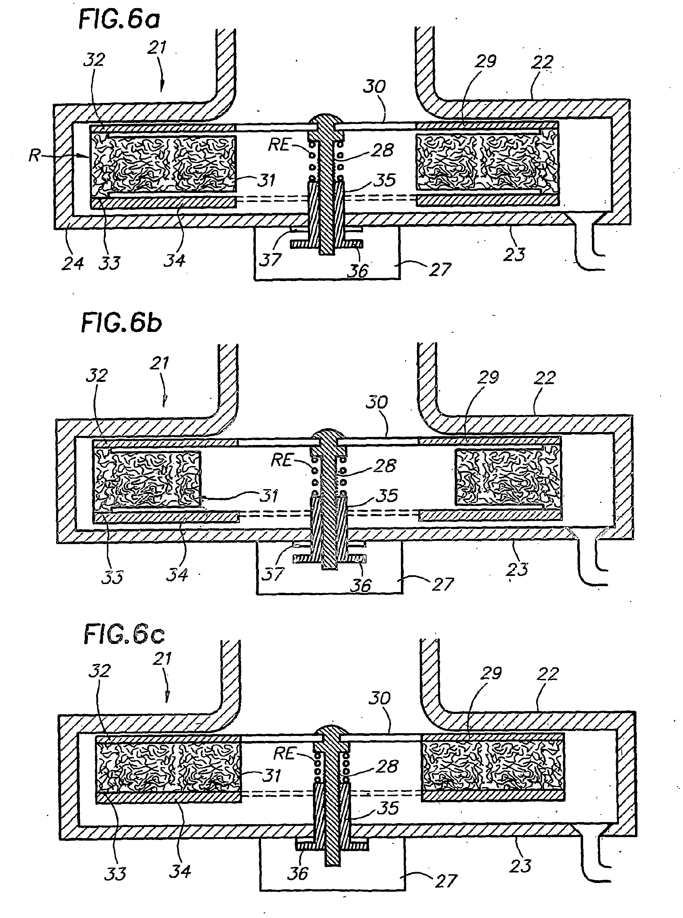

Dans l'exemple illustré sur les figures 6a à 6c, la machine rotative présente une structure similaire à celle du mode d'exécution des figures 1 et 2.

En effet, elle comprend un boîtier 21 comportant deux flasques rectangulaires coaxiaux 22, 23 reliés l'un à l'autre par une paroi transversale 24 légèrement en spirale qui s'étend perpendiculairement ou obliquement par rapport aux deux flasques 22, 23.

A l'intérieur du boîtier 21 est monté rotatif un rotor R, axé perpendiculairement aux deux flasques 22, 23 et entraîné en rotation par un moteur électrique 27 solidaire du flasque 23. Ce rotor R est donc au moins partiellement entouré par la paroi transversale 24.

Le rotor R comprend un axe central 28 qui s'étend coaxialement au boîtier 21 et qui est entraîné en rotation par le moteur 27. Cet axe 28 entraîne lui-même dans sa partie supérieure un disque 29 présentant une partie centrale ajourée 30. Sur ce disque 29 est fixée une garniture en forme de couronne 31, réalisée en une matière souple perméable aux fluides, la fixation entre le disque 29 et la garniture 31 s'effectuant uniquement au niveau de la bordure extérieure 32 des faces radiales de ces deux éléments.

La garniture en forme de couronne 31 est réalisée en une matière souple, par exemple de structure réticulaire et/ou alvéolaire à cellules ouvertes.

La bordure extérieure 33 de la face inférieure de la garniture 31 est reliée à une pièce annulaire massive 34, éventuellement montée rotative avec possibilité de déplacement axial sur l'axe central 28 grâce à un palier 35.

Le fonctionnement de cette machine est alors le suivant : en régime permanent (fig. 6a), le moteur 27 tourne à vitesse constante. Cette rotation engendre une circulation d'air au travers de la garniture 31 et, en conséquence, un processus de filtration du courant d'air ainsi produit. La force centrifuge qui s'exerce sur la garniture 31 provoque une compression de la matière réticulaire ou alvéolaire qui détermine la gamme de tailles des particules qui seront retenues par cette matière.

En conséquence, l'opérateur pourra régler cette vitesse de rotation en fonction des tailles de particules qu'il désire filtrer (fig. 6b).

Périodiquement, la garniture 31 pourra être nettoyée de manière à conserver l'efficacité du filtrage. A cet effet, il suffira de provoquer une variation brusque de la vitesse de rotation du moteur 27.

En effet, cette variation a pour effet de provoquer un décalage angulaire entre le disque d'entraînement 30 de la garniture 31 et la pièce annulaire 34 qui, du fait de son inertie, exerce un couple résistant.

Ce décalage angulaire provoque une torsion de la garniture 31 et une réduction de la distance entre le disque 29 et la pièce annulaire 34 (fig. 6c). On obtient un double effet de torsion/compression (analogue à celui qu'on exerce sur une serpillière pour extraire le liquide de lavage) avec en plus une circulation d'air au travers de la garniture.

Ce double effet de torsion/compression peut être répété en effectuant plusieurs variations de vitesse successives, en prévoyant entre chaque variation de vitesse un temps suffisant pour permettre à la garniture 31 de reprendre sa position initiale. On obtient ainsi un nettoyage particulièrement efficace de la garniture 31.

Eventuellement, l'axe central 28 pourra comprendre une gorge hélicoïdale (filetage) coopérant avec un doigt (ou un taraudage) prévu dans le palier 35.

Dans ce cas, une variation de vitesse pourra provoquer, selon qu'il s'agit d'un accroissement ou d'une diminution de la vitesse, un écartement ou un rapprochement entre le disque 29 et la pièce annulaire 34 et, en conséquence, une dilatation ou une compression de la garniture 31.

Selon une autre variante d'exécution de l'invention, lors des phases de nettoyage, la pièce annulaire 34 pourra être soumise à des vibrations, axiales par exemple, grâce à une action d'une dent 36 solidaire du palier 35 venant en appui sur une surface annulaire crantée ou ondulée 37 solidaire du boîtier 21 (fig. 6c).

Des moyens de freinage commandables pourront être également prévus pour freiner la rotation de la pièce annulaire 34 et augmenter ainsi l'effet de torsion/compression.

De même, un ressort de compression RE pourra être interposé entre la partie centrale ajourée 30 et la pièce annulaire 34 ou le palier 35.

## Revendications

1. Machine rotative apte à engendrer un flux de fluide, comprenant un rotor (6) portant une garniture (9) en forme de couronne au moins partiellement réalisée en matière souple perméable aux fluides, des moyens d'entraînement en rotation à vitesse variable du rotor (6),
**caractérisée en ce qu'**elle comprend des moyens d'auto-nettoyage comportant en combinaison :
- des moyens de commande aptes à agir sur les susdits moyens d'entraînement en rotation à vitesse variable du rotor (6) de manière à engendrer une variation brusque de la vitesse de rotation dudit rotor (6),
- des moyens de couplage entre une première face de la garniture et les susdits moyens d'entraînement, et
- une pièce annulaire portée par une deuxième face de la garniture de manière à ce qu'en raison de l'inertie de cette pièce annulaire, ladite variation brusque de la vitesse de rotation dudit rotor (6) engendre un processus de torsion/compression de la garniture et en conséquence ledit auto-nettoyage de cette garniture (9).

2. Machine selon la revendication 1,
**caractérisée en ce que** la susdite garniture (9) présente la forme d'une couronne contenue dans une cage (8).

3. Machine selon la revendication 1,
**caractérisée en ce que** la susdite garniture (9) présente la forme d'une couronne entourant une cage (8).

4. Machine selon la revendication 1,
**caractérisée en ce que** la susdite garniture comprend deux couronnes (9a et 9b), respectivement contenues dans la susdite cage (8) et entourant la susdite cage (8).

5. Machine selon la revendication 1,
**caractérisée en ce que** la susdite pièce annulaire est montée rotative avec possibilité de déplacement axial sur l'axe (28) d'entraînement du rotor au moyen d'un palier (35).

6. Machine selon la revendication 5,
**caractérisée en ce que** l'axe (28) comprend une gorge hélicoïdale ou un filetage coopérant avec un doigt ou un taraudage prévu dans le palier (35).

7. Machine selon la revendication 5,
**caractérisée en ce qu'**elle comprend des moyens permettant de soumettre la pièce annulaire (34) à des vibrations.

8. Machine selon la revendication 5,
**caractérisée en ce qu'**elle comprend des moyens de freinage de la pièce annulaire (34).

9. Machine selon l'une des revendications précédentes,
**caractérisée en ce que** la susdite garniture (9) est réalisée en matière souple réticulaire et/ou alvéolaire à cellules ouvertes.

10. Machine selon l'une des revendications précédentes,
**caractérisée en ce que** la susdite garniture (9) est réalisée en matière souple fibreuse ou microfibreuse d'origine naturelle et/ou métallique et/ou synthétique et/ou antiseptique.

11. Machine selon l'une des revendications précédentes,
**caractérisée en ce qu'**en vue d'effectuer l'extraction des impuretés contenues dans un gaz, la susdite garniture (9) est réalisée en matière adsorbante et **en ce qu'**elle comprend en outre, d'une part, un dispositif de pulvérisation (11) d'un liquide dans le flux d'air aspiré par la garniture (9) et,
d'autre part, des moyens (13) permettant de recueillir le liquide adsorbé par ladite garniture (9) et éjecté sous l'effet de la force centrifuge.

12. Machine selon la revendication 11,
**caractérisée en ce que** la susdite garniture tourne entre deux flasques parallèles (2, 3), et **en ce que** le flasque inférieur (3) est muni d'une cuvette (13) dans laquelle débouche au moins un orifice d'évacuation de fluide (14).

13. Machine selon l'une des revendications 11 et 12,
**caractérisée en ce que** la susdite paroi transversale (4) est munie de cannelures orientées vers le bas ou de reliefs éventuellement hélicoïdaux ou obliques servant à canaliser du liquide dans une direction souhaitée.

14. Machine selon l'une des revendications précédentes,
**caractérisée en ce qu'**un ressort (RE) est interposé entre les deux faces radiales de la garniture (9).

15. Machine selon l'une des revendications précédentes,
**caractérisée en ce que** la susdite garniture présente une structure composite comportant deux parties plus ou moins perméables ou imperméables au fluide déplacé ou propulsé, de manière à diriger le fluide dans la masse ou augmenter le rendement de capture et/ou aéraulique de la masse réticulaire ou évacuer des condensats, des liquides ou des bulles. (en phase liquide).

16. Machine selon l'une des revendications précédentes,
**caractérisée en ce que** la susdite garniture comprend des couches superposées et/ou concentriques de matières différentes.

## Claims

1. A rotary machine capable of generating a flux of fluid, comprising a rotor (6) bearing a fitting (9) in the form of a crown at least partly made in a flexible material, permeable to fluids, means for driving the rotor (6) into rotation at a variable velocity,
**characterized in that** it comprises self-cleaning means comprising as a combination:
- control means capable of acting on the aforesaid means for driving the rotor (6) into rotation at a variable velocity so as to generate a sudden change in the rotational velocity of said rotor (6),
- coupling means between a first face of the fitting and the aforesaid driving means, and
- an annular part borne by a second face of the fitting so that due to the inertia of this annular part, said sudden change in the rotational velocity of said rotor (6) generates a process of torsion/compression of the fitting and consequently said self-cleaning of this fitting (9).

2. The machine according to claim 1,
**characterized in that** the aforesaid fitting (9) has the form of a crown contained in a cage (8).

3. The machine according to claim 1,
**characterized in that** the aforesaid fitting (9) has the form of a crown encircling a cage (8).

4. The machine according to claim 1,
**characterized in that** the aforesaid fitting comprises two crowns (9a and 9b), respectively contained in the aforesaid cage (8) and encircling the aforesaid cage (8).

5. The machine according to claim 1,
**characterized in that** the aforesaid annular part is rotatably mounted with the possibility of axial displacement on the axis (28) for driving the rotor, by means of a bearing (35).

6. The machine according to claim 5,
**characterized in that** the axis (28) comprises a helical groove or threading cooperating with a finger or internal screw thread provided in the bearing (35).

7. The machine according to claim 5,
**characterized in that** it comprises means for subjecting the annular part (34) to vibrations.

8. The machine according to claim 5,
**characterized in that** it comprises means for braking the annular part (34).

9. The machine according to any of the preceding claims,
**characterized in that** the aforesaid fitting (9) is made in a flexible, reticular and/or cellular material with open cells.

10. The machine according to any of the preceding claims,
**characterized in that** the aforesaid fitting (9) is made in a flexible fibrous or microfibrous material of natural origin and/or a metal and/or synthetic and/or antiseptic material.

11. The machine according to any of the preceding claims,
**characterized in that** for extracting impurities contained in a gas the aforesaid fitting (9) is made in an adsorbing material and **in that** it further comprises a device (11) for spraying a liquid into the air flux sucked up by the fitting (9) on the one hand and means (13) for collecting the liquid adsorbed by said fitting (9) and ejected under the effect of the centrifugal force on the other hand.

12. The machine according to claim 11,
**characterized in that** the aforesaid fitting rotates between two parallel flanges (2, 3) and **in that** the lower flange (3) is provided with a basin (13) into which at least one fluid discharge port (14) opens.

13. The machine according to any of claims 11 and 12,
**characterized in that** the aforesaid transverse wall (4) is provided with flutes directed downwards or relief features optionally helical or oblique used for channeling the liquid in a desired direction.

14. The machine according to any of the preceding claims,
**characterized in that** a spring (RE) is interposed between both radial faces of the fitting (9).

15. The machine according to any of the preceding claims,
**characterized in that** the aforesaid fitting has a composite structure comprising two portions more or less permeable or impermeable to the displaced or propelled fluid, so as to direct the fluid into the mass or to increase the collection and/or aeraulic efficiency of the reticular mass or to discharge condensates, liquids or bubbles (in the liquid phase).

16. The machine according to any of the preceding claims,
**characterized in that** the aforesaid fitting comprises superimposed and/or concentric layers of different materials.

## Patentansprüche

1. Rotationsmaschine, die dazu geeignet ist, einen Fluidstrom zu erzeugen, und die mit einem Rotor (6) ausgestattet ist, der einen mindestens teilweise in fluiddurchlässigem biegsamen Material ausgeführten kronenförmigen Einsatz (9) trägt, und die Drehantriebselemente mit variabler Geschwindigkeit des Rotors (6) umfasst, **gekennzeichnet dadurch, dass** sie Selbstreinigungsvorrichtungen in Kombination mit folgendem umfasst:
- Steuervorrichtungen, die dazu geeignet sind, auf die besagten rotierenden Steuervorrichtungen mit variabler Geschwindigkeit des Rotors (6) einzuwirken, um eine plötzliche Änderung der Rotationsgeschwindigkeit des genannten Rotors (6) zu bewirken,
- Kopplungselemente zwischen einer ersten Seite des Einsatzes und der besagten Antriebsvorrichtungen, und
- ein ringförmiges Teil, das von einer zweiten Seite des Einsatzes aufgenommen wird, so dass aufgrund der Trägheit dieses ringförmigen Teils die besagte plötzliche Variation der Rotationsgeschwindigkeit des genannten Rotors (6) einen Verdreh-/Kompressionsvorgang des Einsatzes und infolgedessen die entsprechende besagte Selbstreinigung dieses Einsatzes (9) bewirkt.

2. Maschine nach Anspruch 1, **gekennzeichnet dadurch, dass** besagter Einsatz (9) die Form einer in einem Käfig (8) enthaltenen Krone darstellt.

3. Maschine nach Anspruch 1, **gekennzeichnet dadurch, dass** besagter Einsatz (9) die Form einer einen Käfig (8) umgebenden Krone darstellt.

4. Maschine nach Anspruch 1, **gekennzeichnet dadurch, dass** besagter Einsatz zwei Kronen (9a und 9b) umfasst, die jeweils im besagten Käfig (8) enthalten sind und den besagten Käfig (8) umgeben.

5. Maschine nach Anspruch 1, **gekennzeichnet dadurch, dass** das besagte ringförmige Teil drehbar montiert ist, mit axialer Verschiebungsmöglichkeit auf der Antriebsachse (28) des Rotors mittels eines Lagers (35).

6. Maschine nach Anspruch 5, **gekennzeichnet dadurch, dass** die Achse (28) eine schraubenförmige Kehle oder ein Gewinde umfasst, die oder das mit einem Finger oder einer Ausbohrung im Lager (35) zusammenwirkt.

7. Maschine nach Anspruch 5, **gekennzeichnet dadurch, dass** diese Vorrichtungen umfasst, wodurch es ermöglicht ist, das ringförmige Teil (34) Vibrationen auszusetzen.

8. Maschine nach Anspruch 5, **gekennzeichnet dadurch, dass** diese Bremsvorrichtungen des ringförmigen Teils umfasst. (34).

9. Maschine nach einem der vorangehenden Ansprüche, **gekennzeichnet dadurch, dass** der besagte Einsatz (9) aus flexiblem netzartigem und/oder zellartigem Material mit offenen Zellen ausgebildet ist.

10. Maschine nach einem der vorangehenden Ansprüche, **gekennzeichnet dadurch, dass** besagter Einsatz (9) aus faserigem biegsamen oder mikrofaserigen Material natürlichen und/oder metallischen und/oder synthetischen und/oder antiseptischen Ursprungs ausgebildet ist.

11. Maschine nach einem der vorangehenden Ansprüche, **gekennzeichnet dadurch, dass** der besagte Einsatz (9) zur Beseitigung von in einem Gas enthaltenen Unreinheiten aus einem adsorbierenden Material hergestellt ist, **und dass** sie außerdem einerseits eine Sprühvorrichtung (11) einer durch den Einsatz (9) im Luftstrom angesaugten Flüssigkeit umfasst, und andererseits Vorrichtungen (13) zur Aufnahme der adsorbierten Flüssigkeit durch besagten Einsatz (9) und die unter der Wirkung der Zentrifugalkraft ausgestoßen wird.

12. Maschine nach Anspruch 11, **gekennzeichnet dadurch, dass** sich der besagte Einsatz zwischen zwei parallelen Flanschen (2, 3) dreht, und **dadurch, dass** der Unterflansch (3) mit einer Schale (13) versehen ist, in welche mindestens eine Fluidablaßöffnung (14) mündet.

13. Maschine nach einem der Ansprüche 11 und 12, **gekennzeichnet dadurch, dass** die besagte Querwand (4) mit nach unten weisenden Rillen oder mit eventuell schraubenförmigen oder schrägen Reliefs versehen ist, die zur Kanalisierung der Flüssigkeit in einer gewünschten Richtung dienen.

14. Maschine nach einem der vorangehenden Ansprüche, **gekennzeichnet dadurch, dass** eine Feder (RE) zwischen den beiden radialen Seiten des Einsatzes (9) eingelegt ist.

15. Maschine nach einem der vorangehenden Ansprüche, **gekennzeichnet dadurch, dass** der besagte Einsatz eine kombinierte Struktur mit zwei mehr oder weniger fluiddurchlässigen oder fluidundurchlässigen Teilen aufweist, die so verschoben oder angetrieben sind, um das Fluidum in die Masse einzuleiten oder die Fang- und/oder Luftförderleistung der netzförmigen Masse zu erhöhen oder das Kondenswasser, Flüssigkeiten oder Blasen (in flüssiger Phase) auszuleeren.

16. Maschine nach einem der vorangehenden Ansprüche, **gekennzeichnet dadurch, dass** der besagte Einsatz überlagerte und/oder konzentrische Schichten verschiedener Stoffe umfasst.
